# EUROPEAN PATENT APPLICATION

(11) **EP 4 679 419 A1**
(43) Date of publication of application: **14.01.2026**
(21) Application number: 25187380.8
(22) Date of filing: 03.07.2025
(51) Int. Cl.: G10L 17/00, G06F 21/32, G06F 21/62, H04L 9/40, H04L 9/32

(54) **AUTHENTICATION METHOD AND SYSTEM BY VOICE IDENTIFICATION**

(30) Priority: 08.07.2024 IT 202400015697
(71) Applicant: Wallife S.p.A., 00187 Roma (IT)
(72) Inventor: CAPOZZA, Massimo, 00187 Roma (IT)
(74) Representative: Carangelo, Pierluigi

(57) **Abstract**

A voice authentication method (100), for authenticating a user by voice at an identification terminal (10), comprising the steps of:
- for an authentication instance, acquiring (102) a voice signal representative of the user's voice by means of a user terminal (1);
- generating (103), by means of the user terminal (1), at least one obfuscation parameter (Kcr) of the voice signal, wherein the obfuscation parameter (Kcr) is a parameter specifically generated for said authentication instance;
- processing (104), with the user terminal (1), the voice signal by applying an obfuscation function to the voice signal to generate an obfuscated voice signal, wherein said obfuscation parameter (Kcr) controls the obfuscation function;
- transmitting (105), with the user terminal (1), the obfuscated voice signal to the identification terminal (10);
- generating (106), at the identification terminal, said obfuscation parameter (Kcr);
- processing (107), at the identification terminal (10), the obfuscated signal to apply (107) a de-obfuscation function to the obfuscated voice signal and generate a de-obfuscated voice signal, wherein the obfuscation parameter (Kcr) controls the de-obfuscation function;
- analyzing (108), at the identification terminal (10), the de-obfuscated voice signal;
- determining (109), based on the outcome of said step of analyzing (108), whether the de-obfuscated voice signal is authentic or not.

## Description

### Technical field of the invention

The present description relates to the technical field of authentication methods and systems, and in particular, relates to an authentication method and system by means of voice identification.

### Technological background of the invention

Many transactions, or more generally authentication instances, performed by a user using a user terminal can require verification. For example, a transaction can involve the execution of application software on a user terminal, such as a mobile phone or a computer, to verify the identity of a user. Generally, a transaction or an instance of authentication on a user terminal is verified before it is completed. For example, facial recognition and/or fingerprint recognition can be used to verify the identity of a user and the transaction or instance of authentication could be rejected if the verification fails.

"Speaker dependent" voice recognition techniques are now relatively common for authenticating transactions, such as banking transactions, where the identity of the person conducting the transaction is verified by checking that his/her voice matches that of the expected subject.

There are many existing voice recognition techniques, but they all fundamentally rely on comparing the voice of a user conducting the transaction with voice samples that the subject has previously provided at a time in which there was reasonable certainty that the subject who was speaking was the authentic subject and not a hypothetical impostor. Such voice samples allow reconstructing a voice model of the user.

In relatively recent times, artificial intelligence techniques have made it possible for software tools to become available, and in some cases easily accessible, which software tools can reconstruct a subject's voice model from a modest number of real voice samples of the user, and based on that model, artificially utter any sentence more or less exactly as the actual user would have uttered it. We are in the context of so-called "deep fakes", in which sentences are artificially constructed as if uttered by more or less famous individuals, for purposes that are sometimes at least reprehensible, if not outright criminal.

The availability of the aforementioned software tools now poses a danger to everyone who uses voice recognition to authenticate transactions, because an impostor who has collected a modest number of voice samples from a subject can reproduce the subject's voice with a high level of accuracy and authenticate in his/her place for purposes that can be fraudulent. The most typical cases can involve the authorization of a fraudulent transfer of funds from one account to another, or the purchase of goods or services using someone else's credit card. Another example is the case when an impostor on a telecommunications network uses the voice of a real subject, whose voice is known to the user, to steal sensitive information from the user (passwords or generally credentials, credit card data, PINs, personal data, confidential information).

Therefore, a need is felt to enhance the security of known authentication methods and systems based on voice recognition or identification.

It is the object of the present invention to provide a method and system of authentication capable of meeting the aforementioned need.

These and other objects are achieved by an authentication method as defined in claim 1 in the most general form thereof, and in the claims dependent thereon in certain specific embodiments. Such objects are also achieved by an authentication system as defined in claim 13.

The present invention does not replace authentication through voice identification but rather integrates it by adding a further layer of security, and in some of the possible embodiments thereof, provides mechanisms which allow detecting dubious situations, which, for example, can be brought to the attention of a human operator for any further checks to be conducted immediately or at a later time.

### Brief description of the drawings

The invention will be better understood from the following detailed description of embodiments thereof, given by way of non-limiting example with reference to the accompanying drawings, in which:
- figure 1 shows a simplified block logic diagram of an authentication system according to a non-limiting embodiment of the present invention;
- figure 2 shows a flowchart of a non-limiting embodiment of an authentication method executable by means of the authentication system in figure 1;
- figure 3 shows an example diagram of an additive scrambler;
- figure 4 shows an example diagram of a multiplicative scrambler;
- figure 5 shows an example diagram of a multiplicative de-scrambler complementary to the multiplicative scrambler in figure 4;
- figure 6 shows a timing diagram of an obfuscation sequence;
- figure 7 shows a timing diagram of the voice signal to be obfuscated;
- figure 8 shows a timing diagram of an obfuscated signal;
- figure 9 shows a spectral diagram of the voice signal to be obfuscated;
- figure 10 shows a spectral diagram of the obfuscated voice signal;
- figure 11 shows a spectral diagram of the filtered obfuscated voice signal; and
- Figure 12 shows a spectral diagram of the obfuscated voice signal after an obfuscating signal canceling operation.

In the accompanying drawings, the same or similar elements will be indicated by the same reference signs.

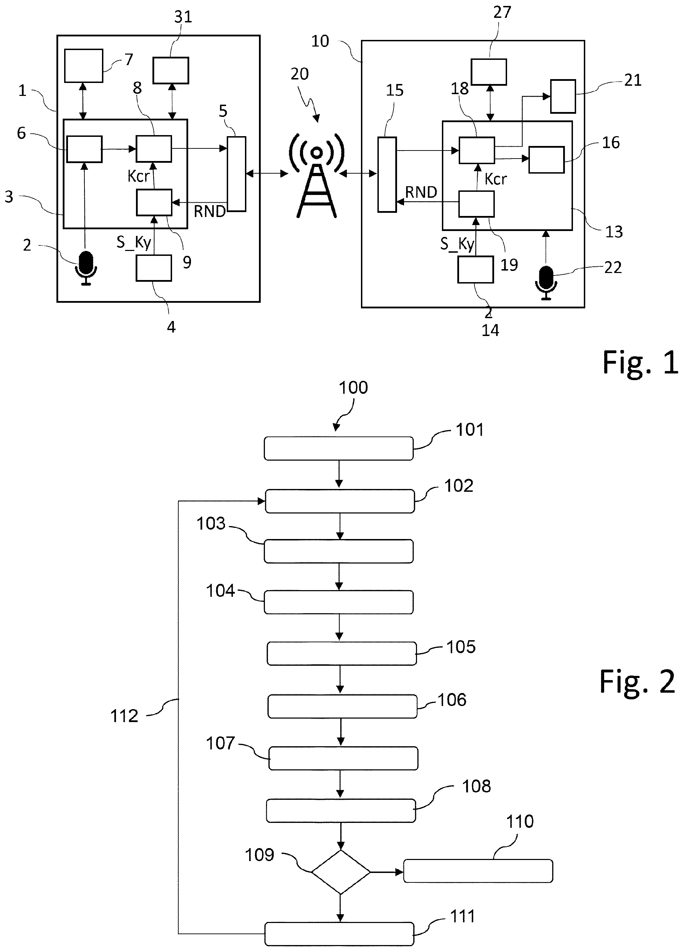

Figure 1 shows an embodiment of an authentication system 1, 10, 20 by way of non-limiting example. The authentication system 1, 10, 20 comprises at least one user terminal 1, at least one identification terminal 10, and at least one telecommunications network 20 configured to operatively connect the user terminal 1 and the identification terminal 10 with each other. The telecommunications network 20 can be a wireless network, a wired network, or a hybrid network which is partly wireless and partly wired. For example, at least part of the telecommunications network 20 is a mobile network, e.g., a 4G, LTE, or 5G network.

The user terminal 1 is, for example, a personal computer or a personal communication mobile device, such as a smartphone, a tablet PC, or a wearable communication device, such as a smartwatch, for example. The user terminal 1 comprises a processing unit 3, such as a microprocessor, a processor, or a SoC (System on Chip), for example, and at least one memory unit 4 connected to, or integrated into, the processing unit 3. Conveniently, the memory unit 4 is a secure memory unit. The user terminal 1 comprises at least one microphone 2 operatively connected to the processing unit 3 so that the latter is capable of acquiring at least one voice signal by means of the microphone 2. The microphone 2 can be a microphone integrated into the user terminal 1 or an external microphone. The user terminal 1 can comprise a display 7, e.g., a touchscreen display. Additionally, the user terminal 1 can comprise at least one acoustic transducer 31, e.g., at least one speaker.

The user terminal 1 comprises at least one communication interface 5, e.g., a wireless communication interface, operatively connected to the processing unit 3. The communication interface 5 is configured to connect the user terminal 1 to the telecommunications network 20. For example, the communication interface 5 is a long-range radio communication interface and, for example, comprises a mobile-network modem, such as a 4G, LTE, or 5G modem, for example.

The identification terminal 10 is a terminal with which the user interacts by means of the user terminal 1 to authenticate, e.g., to conduct a transaction which needs to be authorized, or to allow another user to speak with the user of the user terminal 1. With reference to the use cases previously exemplified in the "technological background of the invention" section of this description, the identification terminal 10 comprises, for example, the backend system of a bank or a credit cards management network. However, the identification terminal 10 could also be a personal computer or a personal mobile communication device, such as a smartphone, a tablet PC, or a wearable communication device, such as a smartwatch, for example. As explained above, between the user terminal 1 and the identification terminal 10, there is any telecommunications network 20 (or "communication channel") which allows the user terminal 1 to send and receive data to and from the identification terminal 10, including voice data, regardless of the type of communication channel used (i.e., whether it is a proper voice communication channel or a data communication channel used to transmit voice information, such as techniques known as Voice Over IP or VOIP).

Similarly to the description given for the user terminal 1, the identification terminal 10 comprises at least one processing unit 13 and at least one memory unit 14, connected to or integrated into the processing unit 13. Preferably, the memory unit 14 is a secure memory unit. For example, the processing unit 13 can be, without introducing any limitation, a mainframe or an industrial PC and can also comprise a plurality of distributed processing units. The identification terminal 10 further comprises a communication interface 15 operatively connected to the data processing unit 13. The communication interface 15 is configured to connect the identification terminal 10 to the telecommunications network 20. The communication interface 15 can be a radio communication interface or a wired communication interface, e.g., an Ethernet communication interface. Similarly to the description given for the user terminal 1, the identification terminal can comprise a speaker 21. Furthermore, similarly to the description given for the user terminal 1, the identification terminal 10 can comprise a display 27 and/or a microphone 22.

In a manner known per se, the processing unit 3 of the user terminal 1 is conveniently configured to perform a voice encoding 6 in order to obtain a coded voice signal of the user's voice to be transmitted to the identification terminal 10. In a manner known per se, the voice encoding can include the following operations: sampling an analog signal provided by the microphone 2, digital filtering, encoding, compression, etc. Voice encoding is an application of data compression to digital audio signals containing speech. Voice encoding uses the estimation of specific speech parameters by employing audio signal processing techniques to model the voice signal, combined with general data compression algorithms to represent the resulting modeled parameters in a compact bitstream. Common applications of voice encoding are mobile telephony and Voice over IP (VoIP). The most commonly used voice encoding technique in mobile telephony is Linear Predictive Coding (LPC), while the most commonly used techniques in VoIP applications are LPC and Modified Discrete Cosine Transform (MDCT) techniques. Since voice encoding is part of the common knowledge of those skilled in the art, further details about it will be avoided in this description.

In the voice authentication systems of the prior art, the encoded voice signal is transmitted from the user terminal 1 by means of the communication interface 5 to the identification terminal 10. Similarly to the systems of the prior art, the identification terminal 10, e.g., by means of the processing unit 13, is configured to execute an identification routine in which the received voice signal, e.g., by means of the communication interface 15, is analyzed in order to determine whether or not said signal exhibits characteristics compatible with the voice of the user attempting to authenticate. In other words, the aforementioned analysis determines whether the received voice signal complies with a voice model previously associated with the user. In addition or as an alternative to the aforementioned identification routine, the identification terminal 10 is configured to drive the acoustic transducer 21, that as mentioned can be a speaker, with the received voice signal, in order to emit an audio band signal and reproduce the voice of the user of the user terminal 1 at the identification terminal 10, so that the further user of the identification terminal 10 can audibly compare it with the voice of user 1 as known or remembered by the further user.

In order to perform the analysis of the aforementioned identification routine, the user of the user terminal 1 must have previously provided, e.g., during the step of affiliation, voice samples of his/her own voice to the identification terminal 10. Such voice samples define one or more characteristics of the user's voice which, during the step of affiliation, are uniquely associated with the user and stored in a database accessible by, or included in, the identification terminal 10. For example, said database is stored in the memory unit 14.

Therefore:
- if the identification terminal 10 determines that the received voice signal has features compatible with those of the voice of the user of the user terminal 1, i.e., if it complies with a voice model associated with the user; and/or
- or the further user establishes that the audio band acoustic signal corresponds to or is similar to the voice of the user of the user terminal 1;
the authentication is successful, i.e., the received voice signal is recognized as authentic, and for example a transaction is authorized or the user of the terminal 1 is recognized. Otherwise, the authentication is unsuccessful, i.e., the received voice signal is recognized as non-authentic, and for example the transaction is not authorized or the user of the user terminal 1 is not recognized.

As explained above, the voice encoding 6 and the identification 16 can occur in a manner entirely identical or similar to that of the prior art.

However, according to the invention, before or after the voice encoding 6, the voice signal acquired from the user terminal 1 is altered at the user terminal 1 by means of an obfuscation function (or routine or software module) 8 to obtain an obfuscated voice signal, which is then transmitted to the identification terminal 10 by means of the communication interface 5. In the diagram in Figure 1, the preferred case is shown in which the alteration (i.e., obfuscation) occurs after the voice encoding 6; however, in some cases, according to the characteristics of the obfuscation function 8, it is possible to apply the obfuscation function 8 first and then the voice encoding 6. This latter choice could be less preferable because it has greater risks and possible limitations in the selection of obfuscating signals (or functions) in order to obtain the correct operation. Since the entire process of sampling and encoding/decoding in the telephony field is thought for voice signals, the more the obfuscated signal deviates from a voice signal, the more likely it is that the signal will undergo undesirable distortions during the sampling and encoding/decoding process, so that downstream of the decoding the obtained signal is not a faithful replica of the voice signal acquired from the user terminal 1. This can undermine, at least in part, the characteristics of both the acquired voice signal and the obfuscating signal that it is intended to recognize.

According to a first embodiment, the obfuscation function is an additive or multiplicative scrambling function of the voice signal. Advantageously, the scrambling function is associated with a generator polynomial and the obfuscation parameter Kcr is at least one coefficient of said generator polynomial. In the case of scrambling, if the obfuscation 8 is performed before voice encoding 6, the correct operation can depend on how much the obfuscated signal can retain characteristics similar to a voice signal. It can operate by choosing scrambling modes (of the analog or sampled signal) which do not significantly alter the spectrum, thus allowing the obfuscated signal to still resemble a voice signal, and therefore not be too distorted by the chain.

According to a second embodiment, the obfuscation function is a function for adding noise to the voice signal. Advantageously, said noise addition function is such as to add DTMF - Dual Tone Multi Frequency - tones to the voice signal. For example, said at least one obfuscation parameter Kcr is such as to set frequencies of said DTMF tones. In the case of noise addition, if the obfuscation 8 is performed before encoding 6, the correct operation can depend on the characteristics of the added noise. Indeed, if the added noise has characteristics compatible with a voice signal itself (e.g., DTMF tones, which were specifically designed to minimize distortions during passage through a voice channel), the whole system can function correctly. However, it is necessary to pay attention to the fact that traditional telephone networks are designed to recognize DTMF signals and isolate them for network signaling purposes; therefore, the telephone channel might intentionally cancel them along the way.

According to a third embodiment, the obfuscation function is an audio watermarking addition function in the non-audible band to the voice signal. In the case of watermarking addition, if the obfuscation 8 is performed before encoding 6, the same applies as for scrambling. In other words, the correct operation depends on how similar or dissimilar the watermark is to a voice signal. For example, the use of sub-vocal DTMF tones would likely perform poorly, because it is highly probable that there is at least one element along the entire chain which cuts out very low frequencies, which are normally non-essential for the transmission of a voice signal.

According to a particularly advantageous embodiment, the parameter Kcr allows not only parameterizing the obfuscation function but also selecting the type of obfuscation function to be parameterized (e.g., by selecting it from the three types described above).

Further details on the aforementioned obfuscation functions will be provided below.

The obfuscated voice signal received by the identification terminal 10, before being subjected to identification 16, is processed by means of a de-obfuscation function (or routine or software module) 18. Said de-obfuscation function 18 performs the inverse operation compared to that performed by the obfuscation function 8. In other words, the de-obfuscation function 18 removes the alterations made by the obfuscation function 8 and returns the voice signal to the identification terminal 10, identical to the original one acquired by the user terminal 1 or, in any case, with any residual alteration that is substantially irrelevant for the purpose of user identification, in addition to of course optionally verifying that the detected obfuscation complies with the expected obfuscation.

According to the invention, the obfuscation function 8 and the de-obfuscation function 18 are parametric, meaning that the alterations made to the voice signal are not always the same but depend on at least one parameter, which is indicated as Kcr in Figure 1. The parameter Kcr can be multidimensional, so it can generally be considered as a vector consisting of multiple scalar parameters. If Kcr is a single parameter, i.e., a scalar parameter, it can be considered as the particular case of a one-dimensional vector.

According to an advantageous embodiment, the parameter Kcr is obtained from the user terminal 1 and the identification terminal 10 by means of a challenge-response algorithm, comprising a routine 9 performed at the user terminal 1 and a complementary routine 19 performed at the identification terminal 10. For generating the parameter Kcr, the aforementioned routines 9, 19 utilize a private key Ky previously stored at both the user terminal 1 (e.g., in the memory unit 4) and the identification terminal 10 (e.g., in the memory unit 14).

As explained above, the parameter Kcr, and therefore the alterations of the voice signal, are specific to each authentication instance, e.g., they change from transaction to transaction. If the parameter Kcr is obtained by means of a challenge-response algorithm, this allows both the user terminal 1 and the identification terminal 10 to know the parameter Kcr without it ever being exchanged between them over the telecommunications network 20, thus preventing the parameter Kcr of that specific authentication or transaction instance from being known by any third party capable of intercepting it along the communication channel. Challenge-response methods are well known. In the context of the present invention, without excluding other possible mechanisms, it is advantageous to use a particular class of challenge-response methods, referred to as the Challenge-Handshake Authentication Protocol (CHAP), which is based on the principles that will be explained below.

Conveniently, there is an initial step of affiliation between the user terminal 1 and the identification terminal 10, where the identity of the concerned user and the user terminal 1 being used, as well as that of the identification terminal 10, is considered absolutely certain, e.g., because the affiliation operation takes place at a bank in the presence of bank tellers who can check the concerned user's identity documents.

During the step of affiliation, the user terminal 1 and the identification terminal 10 exchange, once and for all, a shared key S_Ky, that is substantially a random key, which is stored in secure memory areas of the user terminal 1 and the backend 10 (such as the memory units 4 and 14, for example). The shared key S_Ky is conveniently exchanged using encryption techniques which prevent the interception thereof along the communication channel. For example, the identification terminal 10 creates a pair of public/private encryption keys, sends the public key to the user terminal 1, which the user terminal 1 uses to encrypt the shared key S_Ky which it creates and sends to the identification terminal 10, and which the identification terminal 10 finally decrypts with the corresponding private key. Alternatively, it is the user terminal 1 that creates a pair of public/private keys, sends the public key to the identification terminal 10, which the identification terminal 10 uses to encrypt the shared key S_Ky which it creates and sends to the user terminal 1, and which the user terminal 1 decrypts with the corresponding private key. This ensures that the shared key S_Ky is known only to the user terminal 1 and the identification terminal 10, and not to any eavesdroppers on the communication channel who, lacking the private key, cannot decrypt the shared key.

Both the user terminal 1 and the identification terminal 10 have a challenge-response algorithm which belongs to the class of algorithms designed for this purpose (see details below). The challenge-response algorithm used does not need to be secret; it could also be publicly known because the fundamental element of security is the confidentiality of the shared key S_Ky.

When a transaction to be authenticated or generally an authentication instance is initiated, the identification terminal 10 sends the so-called "challenge" to the user terminal 1, which is a random number RND within a certain range defined by the challenge-response algorithm used. If the parameter Kcr is multidimensional, RND can also be multidimensional, consisting of a challenge for each dimension of the parameter Kcr. Also in this case, it is not necessary for the challenge RND to remain confidential; even if someone were to intercept it along the communication channel, he/she could do nothing with it unless the interceptor also possesses the shared key S_Ky.

By means of the challenge-response algorithm, the parameter Kcr is calculated both on the side of the user terminal 1 and on the side of the identification terminal 10; on the side of the user terminal 1, it will be used to obfuscate the voice signal, while on the side of the identification terminal 10, it will be used to de-obfuscate, optionally also checking that the obfuscation was performed with the same parameter Kcr and not with another one.

As specified in greater detail below, the challenge-response algorithms are designed so that it is substantially impossible for an outsider to predict what the value of the parameter Kcr calculated on the side of the user terminal 1 and the identification terminal 10 will be, unless he/she possess the shared key S_Ky. Only by intercepting an huge number of challenges and knowing the related responses could an outsider infer the value of the shared key S_Ky, but this would require observation periods of entire years, which is impractical because user terminals 1 are changed, keys are renewed, and so on, in the meantime.

In the previous description, it was assumed that the challenge is generated by the identification terminal 10 and sent from it to the user terminal 1. The reverse can also be true, as the mechanism is perfectly symmetrical.

In the event of theft of the user terminal 1, it is easy to prevent transactions with that terminal 1 by simply invalidating the shared key S_Ky or changing the value thereof on the identification terminal 10 side.

If the concerned person uses multiple user terminals 1, there will conveniently be a step of affiliation for each user terminal 1, and thus shared keys S_Ky will be defined, generally different for each user terminal 1. During the step of de-obfuscation, the identification terminal 10 determines the parameters Kcr related to each user terminal 1 and verifies that the de-obfuscation occurs correctly with one of them.

Based on the foregoing description, it is thus inferred that the innovative part of the authentication system 1, 10, 20 in Figure 1, compared to the prior art, lies in the functions performed by the blocks 8, 9, 4 in the user terminal 1 and by the blocks 18, 19, 14 in the identification terminal 10.

With reference to Figure 2, an authentication method 10 will now be described, executable by means of the authentication system 1, 10, 20 previously described with reference to Figure 1 or executable by similar or equivalent systems. Further features of the authentication method 100 which are apparent from the description given above for the authentication system 1, 10, 20 may not be repeated for brevity.

Some embodiments of possible obfuscation algorithms will also be described, and further details on the challenge-response algorithm for generating the parameter Kcr will be provided.

With reference to Figure 2, the voice authentication method 100 is configured to authenticate a user by voice at an identification terminal 10.

For example, a user of the user terminal 1 needs to be authenticated to execute/finalize a transaction (such as a purchase of goods or services or a transfer of funds, for example), to access a website, an Intranet, etc. In a further example, a user of the user terminal 1 wants to speak with a user of the authentication terminal 10. For example, the user of the user terminal 1 could be a bank customer, and the user of the authentication terminal 10 could be a bank teller or an associate of the bank. Obviously, the roles can be completely reversed, and the user terminal 1 could be used on the bank side, and the authentication terminal 10 could be used on the customer side.

The authentication method 100 can comprise a step of initiating 101 an authentication instance, and said initiation can be requested by the user terminal 1, or by the identification terminal 10, or by a further user terminal. For example, said further user terminal can be a POS or an ATM. For example, said further user terminal can be a PC by means of which a user has performed some preparatory operations for the transaction (e.g., selecting the goods or service to purchase or Internet banking operations) and that require authentication by means of the user terminal 1, which is, for example, a smartphone.

The authentication method 100, for each authentication instance, comprises a step 102 of acquiring a voice signal representative of the user's voice by means of the user terminal 1. As explained above, in the user terminal 1, the step of acquiring 102 is performed by means of the microphone 2 and the processing unit 3, e.g., as well as a voice encoding module 6 (also referred to as Vocoder). For example, in the voice signal, a vocal response of the user to a question transmitted, e.g., from the identification terminal 10 to the user terminal 1 or to the aforementioned further terminal, is recorded. Alternatively, in the voice signal, the user's voice is recorded while reading a word or a phrase that is displayed to the user (e.g., on the display 7 of the user terminal 1 or of the further terminal) with a request to read it.

The authentication method 100 comprises a step 103 of generating, by means of the user terminal 1, at least one obfuscation parameter Kcr of the voice signal, where the obfuscation parameter Kcr is a parameter specifically generated for the concerned authentication instance.

The authentication method 100 comprises a step of processing 104, with the user terminal 1, the voice signal by applying an obfuscation function to the voice signal to generate an obfuscated voice signal, where the obfuscation parameter Kcr controls the obfuscation function. In other words, the alteration made to the voice signal by the obfuscation function depends on the parameter Kcr which, as already explained, can be a single parameter (scalar parameter) or comprise a plurality of parameters (vector parameter). As explained above, the voice encoding can be performed during the step of acquisition 101; in this case, during the step of processing 104, the obfuscation function is thus applied to the encoded voice signal. Alternatively, it is possible to provide the application of the obfuscation function to the acquired voice signal not yet subjected to voice encoding during the processing step 104, and therefore include a voice encoding step after the processing step 104.

The authentication method 100 comprises a step of transmitting 105, with the user terminal 1, the obfuscated voice signal to the identification terminal 10. For example, this occurs by means of the communication interface 5 and the telecommunications network 20.

Therefore, the obfuscated voice signal is received by the identification terminal 10, e.g., by means of the communication interface 15.

The authentication method 100 further comprises a step of generating 106 said obfuscation parameter Kcr at the identification terminal 10. In other words, based on the above description, it is apparent that the user terminal 1 and the identification terminal 10 must be capable of generating the same parameter Kcr. Although in the diagram in Figure 2 the step of generating 106 performed at the user terminal 1 is shown as following the step of generating 103 performed at the identification terminal 10, this does not imply that there is an execution order between said steps 103, 106, because the order could be reversed or the two steps 103, 106 could be performed simultaneously. Generally, unless otherwise specified or dictated by technical considerations, the sequence of steps shown in the flowchart in Figure 2 does not necessarily imply a precise temporal order of execution of the steps.

The authentication method 100 comprises a step of processing 107, at the identification terminal 10, the obfuscated voice signal to apply a de-obfuscation function thereto and generate a de-obfuscated voice signal. The obfuscation parameter Kcr controls the de-obfuscation function.

The authentication method 100 comprises a step of analyzing 108, at the identification terminal 10, the de-obfuscated voice signal and a step of determining 109, based on the outcome of said analyzing step 108, whether the de-obfuscated voice signal is authentic or not. According to an embodiment, the step of analyzing 108 is performed by means of a computer algorithm designed to determine whether the de-obfuscated signal is compatible or not with one or more features previously associated with the user's voice during an step of affiliation at the identification terminal 10. In other words, in the analyzing step 108, it is automatically detected whether the de-obfuscated voice signal is compatible or not with a voice model previously associated with the user. Therefore, in the aforementioned case, the analysis 108 is a computerized analysis. Additionally or alternatively, in the step of analyzing 109, the de-obfuscated voice signal is acoustically reproduced with an acoustic transducer 21 at the identification terminal 10 so that a designated human operator can determine 109 whether the acoustically reproduced signal corresponds to the user's voice as known and/or remembered by them. In this case, therefore, the analysis is human. It is particularly advantageous to perform both the computer analysis and the human analysis, e.g., mutually in parallel. For example, according to an advantageous embodiment, while the human operator listens to and analyzes the acoustically reproduced signal, the de-obfuscated voice signal is analyzed by a computer algorithm, and if it is determined that the de-obfuscated voice signal is not authentic, a non-authenticity warning perceivable by the human operator is issued, such as a graphical warning on the display 27. Similarly, an authenticity warning can be issued if it is determined that the voice signal is authentic.

The authentication method 100 comprises a step of accepting 110 (i.e., validating) the authentication instance if in the determining step 109 it is determined that the de-obfuscated voice signal is authentic. Otherwise, i.e., if an incompatibility is determined, the authentication method 100 comprises a step of rejecting 111 the authentication instance, and thus, for example, rejecting a transaction or not recognizing the identity of the user of the user terminal 1. In this case, as indicated by arrow 112 in Figure 2, the user can be given the opportunity to make one or more further authentication attempts by repeating steps 102-109, conveniently up to a limited total number of authentication attempts, e.g., three.

According to a particularly advantageous embodiment, the authentication method 100 comprises an additional step (not shown in the figures) of extracting an obfuscating signal (also referred to as the extracted obfuscating signal) at the identification terminal 10 from the obfuscated voice signal, which represents a signal which has been superimposed on the voice signal following the application of the obfuscation function at the user terminal 1. Since the parameter Kcr is known at the identification terminal 10, the authentication method 100 can comprise a further step of generating an expected obfuscating signal at the identification terminal 10 and a step of comparing the extracted obfuscating signal with the expected obfuscating signal. In order to further enhance the security of the authentication, in the authentication method 100, the step of accepting 110 the authentication instance can advantageously be subordinated to the fact that, in said step of comparing, it is determined that the extracted obfuscating signal and the expected obfuscating signal are identical. Otherwise, the authentication instance is rejected in step 111. It is thus understood that, in the aforementioned embodiment, the acceptance of the authentication instance is conditioned on the correct recognition at the identification terminal 10 of both the user's voice and the obfuscating signal.

It was previously explained that a first possible type of obfuscation function applicable in the authentication method 100 is a scrambling function.

The scrambling consists in converting the data stream representing the audio signal so that the stream produced by scrambling appears similar to a pseudorandom sequence of bits, and therefore completely obfuscated: it would be difficult even to determine whether the input data stream represented a voice signal or something else.

The most commonly used scramblers in the field of information technology are of two types: additive (also known as synchronous) or multiplicative (also known as self-synchronizing or pass-through). Both types are implemented by combining the input data stream with a pseudorandom binary sequence using shift registers and binary adders

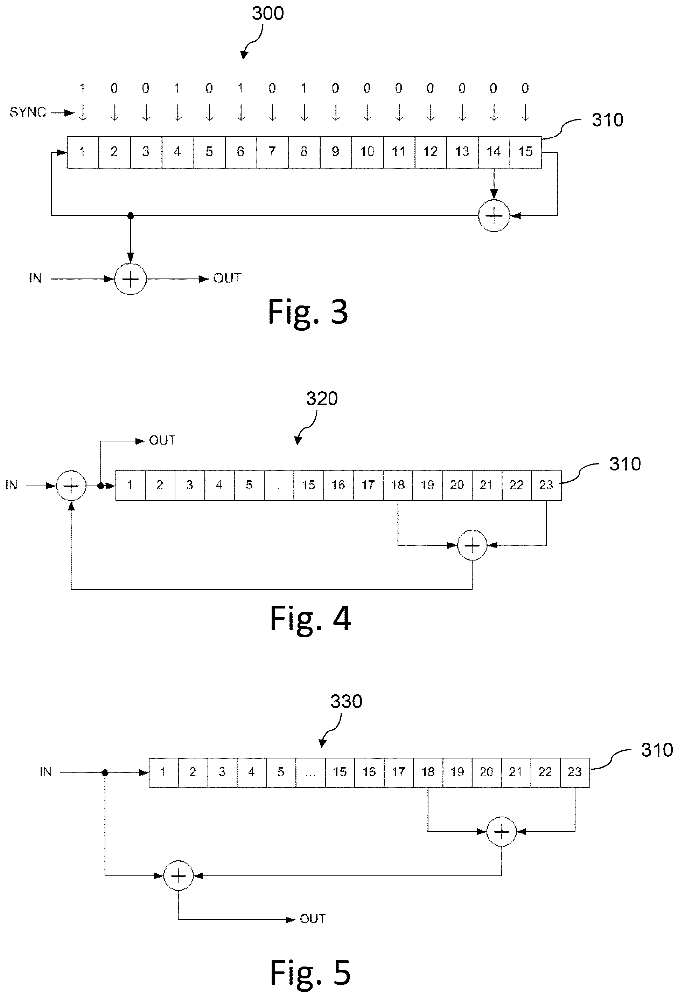

(module 2). An example of an additive scrambler 300, used in Digital Video Broadcasting, is shown in Figure 3.

An additive scrambler is fully characterized by its generator polynomial (in the case of Figure 3, the generator polynomial is 1 + z⁻¹⁴ + z⁻¹⁵ because bits 14 and 15 are fed back into the shift register 310 after being summed) and the initial state (in this case, 10010101000000000). The parameter Kcr (in this case multidimensional) which controls the additive scrambling function could be such as to set the coefficients of the generator polynomial and the initial state.

The additive scramblers 300 require synchronization to be set to the same initial state, and the de-scrambler, which in the authentication method 100 performs the de-obfuscation function 18 (i.e., the step of processing 107), is identical to the scrambler.

An example of a multiplicative scrambler 320, used in the ITU V.34 recommendation, is outlined in Figure 4. Similarly to additive scramblers, a multiplicative scrambler 320 is characterized by its generator polynomial (in the example, the generator polynomial is 1 + z⁻¹⁸ + z⁻²³ because bits 18 and 23, summed, are re-entered into the shift register), but, unlike additive scramblers 300, the multiplicative scramblers 320 synchronize automatically. A multiplicative de-scrambler 330 (Figure 5) is not identical to the multiplicative scrambler 320: it has the same generator polynomial as the scrambler, but the configuration is different, as outlined in Figure 5.

It was previously explained that a second possible type of obfuscation function applicable in the authentication method 10 is a noise addition function.

The addition of noise is mainly known in the literature as a data masking technique. In the context of the present invention, the objective is different: different signals are added to the voice signal not to mask it, but to make the addition of signals recognizable, so that the presence thereof can be verified and finally removed to reconstruct the original voice signal.

A technique that can be considered a form of noise addition on voice channels is the use of DTMF (Dual-Tone Multi-Frequency) tones. Dual-tone pulses are added to the voice signal, which comprise two tones, one of which belongs to the set of so-called "low tones" (four tones, each with a frequency below 1000 Hz) and the other belongs to the set of so-called "high tones" (four tones, each with a frequency above 1000 Hz). Each dual-tone pulse allows identifying one of sixteen possible combinations, conventionally named according to the table illustrated below:

| | **1209 Hz** | **1336 Hz** | **1477 Hz** | **1633 Hz** |
|---|---|---|---|---|
| **697 Hz** | 1 | 2 | 3 | A |
| **770 Hz** | 4 | 5 | 6 | B |
| **852 Hz** | 7 | 8 | 9 | C |
| **941 Hz** | · | 0 | # | D |

By means of multiple consecutive dual-tone pulses, it is possible to identify one among a greater number of combinations. For example, with four pulses it is possible to identify one of 16⁴ = 65,536 combinations. The frequencies of the DTMF tones were chosen to be easily recognizable and minimally sensitive to potential nonlinear channel distortions which could generate harmonics and intermodulation products.

For the purposes of the present invention, more complex waveforms can be advantageously used, provided that they are compatible with the transmission characteristics of a voice channel (thus bandlimited). Therefore, the parameter Kcr can determine the characteristics of the waveform used, such as the frequency components, for example. In the case of DTMF tones, Kcr would be a two-dimensional parameter (one dimension for each of the two frequencies), which, by increasing the number of frequency components, can become multidimensional with a number of dimensions even variable from one authentication instance to another, with the number of dimensions itself being one of the dimensions of the parameter Kcr.

It was previously explained that a third possible type of obfuscation function applicable in the authentication method 10 is an audio signal watermarking function.

Watermarking on audio signals is mainly known in the literature for copyright-related purposes; a marking is added to an audio signal, which is substantially imperceptible to the human ear, but which allows the origin of the signal to be recognized unequivocally and in a virtually indelible manner. In the context of the present invention, the objective is different, but the instrument is similar, with the difference, compared to the addition of noise, that the added item is not audible (or almost not audible) to the human ear, while it is clearly recognizable during the step of de-obfuscation. Some typical requirements for the use of watermarking for copyright purposes are not required in the case of the present invention, whereby it is also possible to use simpler watermarking techniques than those available in the literature.

A known audio watermarking technique is that known as Spread Spectrum Audio Watermarking, where the energy of a narrowband signal is distributed over a wide frequency spectrum using techniques similar to those previously described in relation to scrambling. The energy thus distributed does not substantially alter the characteristics of the voice signal on which it is superimposed. During the step of de-obfuscation, the inverse process is performed (similar to the previously described de-scrambling), so that the energy of the added signal is concentrated again in the narrow band thereof, while the energy of the voice signal is dispersed, thus allowing for a secure detection of the presence of the watermark by means of frequency analysis.

As mentioned, in the case of the present invention, it is possible to use simpler watermarking techniques, such as the addition of audio tones outside the voice band, which typically ranges from about 300 to about 3,400 Hz. However, the use of out-of-band tones at a frequency higher than the voice band can run into the passband limitations of the telephone channel, which typically involves a sampling frequency of 8 KHz and therefore a Nyquist frequency of 4 KHz. Using high-frequency tones can thus give rise to aliasing phenomena. The use of out-of-band tones at very low frequencies, on the other hand, is less problematic, as they can be transferred through the digital audio channel without particular issues; however, they fall into areas which are little or not at all sensitive to hearing and the commonly used acoustic transducers, and are also easily filterable, thus resulting in being substantially imperceptible.

For example, the DTMF tone table could be transposed down by five octaves (i.e., each frequency can be divided by thirty-two), resulting in the following table, in which the characters * and # have been replaced with the hexadecimal values E and F:

| | 37.78 Hz | 41.75 Hz | 46.16 Hz | 51.03 Hz |
|---|---|---|---|---|
| 21.78 Hz | 1 | 2 | 3 | A |
| 24.06 Hz | 4 | 5 | 6 | B |
| 26.63 Hz | 7 | 8 | 9 | C |
| 29.41 Hz | E | 0 | F | D |

By maintaining the frequency ratios of the tones, the properties already described regarding standard DTMF tones are preserved, namely good recognizability and low sensitivity to nonlinear channel distortions which could generate harmonics and intermodulation products.

Also in this case, similarly to the use of a noise addition function, the parameter Kcr can determine the characteristics of the low-frequency waveform used for watermarking, e.g., by establishing the number of components and the related frequencies.

The three types of scrambling functions described above each have advantages and disadvantages. For example, the scrambling ensures that the interception of the obfuscated voice signal is substantially incomprehensible to an outsider, so if the voice signal contained an answer to a question asked to verify a verbal challenge (for instance, "what was your mother's maiden name?"), the person intercepting the obfuscated response does not obtain any useful information. Conversely, since watermarking alters the voice signal in a substantially imperceptible manner, it does not protect any information possibly present in the voice signal, but it can allow for voice identification even if, for any reason, the watermark is not present, or when a different watermark than the expected one is present. This would allow detecting a dubious situation (subject correctly identified but watermark not present or invalid - possible voice deep fake?) which can trigger further verification actions, such as a call from an operator to the concerned subject to verify his/her identity and the ongoing operations.

As explained above, according to a particularly advantageous embodiment, the obfuscation parameter Kcr is generated by means of a challenge-response algorithm concurrently executed by the user terminal 1 and the identification terminal 10.

Challenge-response methods represent a very broad class of authentication methods. In a broad sense, even the simple use of a password for authentication can be seen as a challenge-response method, where the challenge is the request for the password, and the response is the password that is provided. However, in contexts related to information security, more robust mechanisms are typically used to counter potential interception of exchanged information.

According to an advantageous embodiment, in the authentication method 100, the challenge-response algorithm is a CHAP (Challenge-Handshake Authentication Protocol), without excluding other algorithms.

For example, the aforementioned CHAP protocol is used in authentication or encryption on GSM mobile networks.

In GSM terminology, the shared key (here referred to as S_Ky) is indicated as Ki, the random challenge is indicated as RAND (here referred to as RND), the challenge-response algorithm is called A3 or A8, and the output of the algorithm, which in the authentication method 100 is called the parameter Kcr, is instead referred to as SRES in the case of authentication, and Kc in the case of encryption. The aforementioned CHAP protocol is regulated by the ETSI TS 155 205 specification, which defines the following dimensions for the input and output parameters of the algorithms A3 and A8:

| **Parameter** | **Dimensions (bit)** | **Comment** |
|---|---|---|
| Ki | 128 | Subscriber key Ki[0]... Ki[127] |
| RAND | 128 | Random challenge RAND[0]...RAND[127] |
| **Table 1: Input of A3 and A8** | | |

| **Parameter** | **Dimensions (bit)** | **Comment** |
|---|---|---|
| SRES | 32 | Signed response SRES[0]... SRES[31] |
| **Table 2: Output of A3** | | |

| **Parameter** | **Dimensions (bit)** | **Comment** |
|---|---|---|
| Kc | 64 | Cipher key Kc[0]...Kc[63] |
| **Table 3: Output of A8** | | |

In the GSM domain, the algorithms A3 and A8 are not unique, and each operator can freely choose the algorithms A3 to A8 as long as they comply with the specified input and output parameter sizes. In practice, the GSM Association suggests the use of algorithms based on the COMP128 algorithm, particularly in version 3, whose security features are well-known and make it extremely difficult (if not impossible, in practical cases) to deduce the shared key Ki even when a large number of RAND/SRES or RAND/Kc pairs are known.

With the algorithm A3, it is possible to produce, starting from a 128-bit Ki and RAND, a result that is 32-bit, and therefore can take on over four billion different values. For use within the authentication method 100 described here, when the parameter Kcr is one-dimensional, such a range of values can also be larger than necessary, and therefore the range can be reduced by considering, for example, only a subset of the 32 bits produced. If the parameter Kcr is multidimensional, the 32-bit result can be divided according to the required dimensions (e.g., 4 parameters of 8 bits each) and the resulting bits can be assigned to the various dimensions. The algorithm A8, which produces a 64-bit result, can similarly be reduced as necessary, and can support a greater number of dimensions of the parameter Kcr.

For example, in a multidimensional use of the calculated parameter Kcr, the 2 least significant bits of the parameter Kcr can identify the type of obfuscation used according to a table as shown below:

| **Least significant bits of the parameter Kcr** | **Type of obfuscation** |
|---|---|
| 00 | No obfuscation |
| 01 | Scrambling |
| 10 | Noise addition |
| 11 | Watermarking |

In the case of scrambling with the previously described ITU V.34 scheme, the next 23 least significant bits can represent the initial state of the shift register, assuming the generator polynomial (1 + z⁻¹⁸ + z⁻²³) is assigned according to the standard. In the case of adding noise with standard DTMF tones or watermarking with out-of-band DTMF tones, the next least significant bits can be considered in groups of four to represent the number of tones used (first group of four bits) and the hexadecimal digits corresponding to the tones that make up the obfuscation sequence (subsequent groups of four bits). With the algorithm A3, which produces 32-bit Kcr values, it would be possible to indicate sequences consisting of up to a maximum of six normal or out-of-band DTMF tones, corresponding to almost 18 million different obfuscation sequences. With the algorithm A8, it would be possible to indicate sequences consisting of up to a maximum of 14 normal or out-of-band DTMF tones, corresponding to over 70 trillion different obfuscation sequences.

A function of obfuscation through watermarking with DTMF tones at very low frequencies will be described in more detail below, with reference to an actual implementation.

The DTMF tones used for the implementation are those previously described and, due to the frequencies involved, are hereinafter referred to as sub-vocal DTMF tones. For example, the relevant frequency table is illustrated as follows:

| | 37.78 Hz | 41.75 Hz | 46.16 Hz | 51.03 Hz |
|---|---|---|---|---|
| 21.78 Hz | 1 | 2 | 3 | A |
| 24.06 Hz | 4 | 5 | 6 | B |
| 26.63 Hz | 7 | 8 | 9 | C |
| 29.41 Hz | E | 0 | F | D |

In the implementation described below, the audio signals are normalized, with the value -1.00 corresponding to the maximum negative level beyond which clipping would occur (with 16-bit sample encoding, this would correspond to the value -32768), and the value +1.00 corresponding to the analogous maximum positive level (with 16-bit sample encoding, this would correspond to the value -32767).

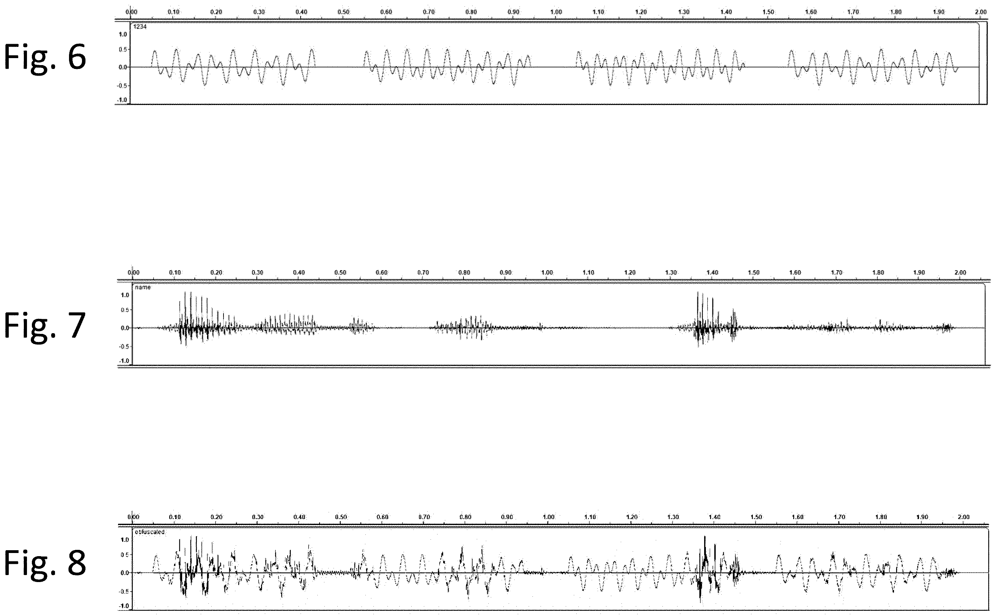

The implementation utilized an obfuscation sequence consisting of 4 sub-vocal DTMF tones, each with a duration of 400 ms, separated by 100 ms of silence, and with a normalized peak amplitude of 0.5. The use of 4 tones allows obtaining 16⁴ = 65536 different obfuscation sequences. The timing diagram for the specific case of the obfuscation sequence 1234 is shown in Figure 6.

The obfuscation sequence lasts a total of 2 seconds, comprising 50 ms of initial and final guard intervals. In order to eliminate any audible "clicks" caused by signal discontinuities which generate higher frequency components, the duration of the tones has been slightly rounded down at the last zero-crossing, using a simple zero-crossing detection algorithm. Therefore, each of the four DTMF pulses begins and ends with a zero value.

In Figure 7, the timing diagram of the voice signal to be obfuscated is shown, obtained by means of the microphone of a mobile phone headset.

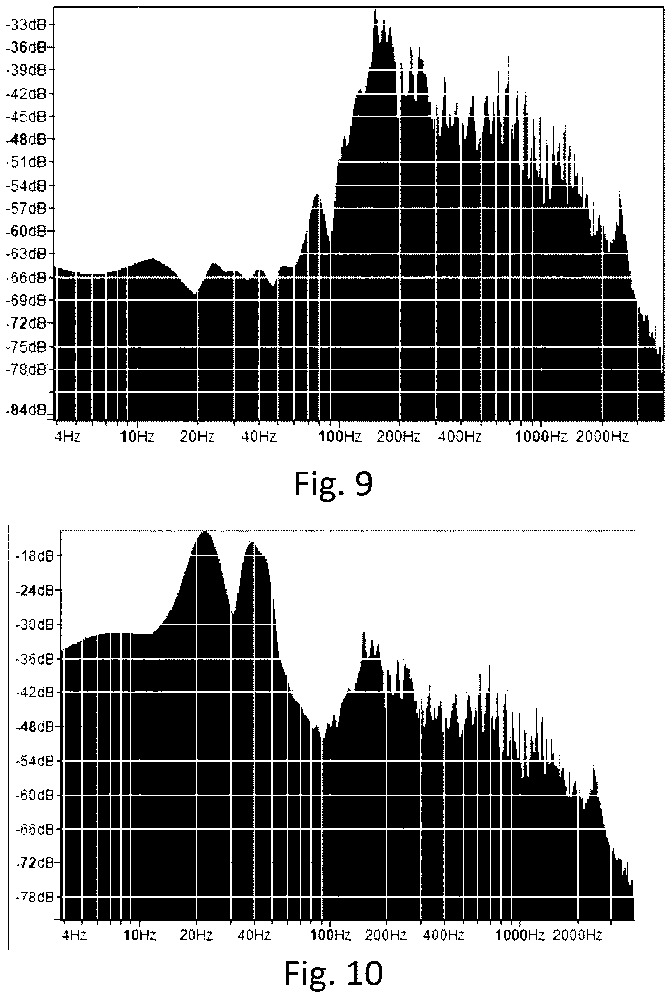

With reference to Figure 9, it is also interesting to observe the spectral diagram of the voice signal to be obfuscated, which highlights that practically all significant frequency components are located from 100 Hz upwards.

The obfuscated voice signal was thus obtained by algebraic summation in the time domain of the two signals, sample by sample. The resulting timing diagram is shown in Figure 8, where the presence of both signals is clear.

The presence of both signals is even clearer in the corresponding spectral diagram shown in Figure 10, where below 100 Hz the spectral components of the sub-vocal DTMF tones emerge apparently, while at frequencies above 100 Hz the spectral diagram of the signal to be obfuscated remains substantially unchanged.

The obfuscated signal appears audibly identical to the signal to be obfuscated because the spectral components of the obfuscating signal are at such low frequencies that the human ear perceives them as heavily attenuated, and the frequency response of audio devices typically does not reach such low frequencies, except with specific measures (e.g., the use of high-fidelity amplifiers connected to large subwoofers).

The obfuscated signal was transmitted over a communication channel using standard VOIP (Voice Over IP) techniques. On the receiving side, efforts were made to separate the original signal from the obfuscating signal, and finally to check that the obfuscating signal was as expected.

For the separation of the original voice signal from the obfuscating signal, two different techniques were used, with substantially equivalent results, namely:
- filtering, using a digital high-pass filter with a cutoff frequency of 100 Hz; or
- cancellation, i.e., adding the obfuscating signal with a step opposite to the step of obfuscation (this is possible since the obfuscating signal used is known on the receiving side).

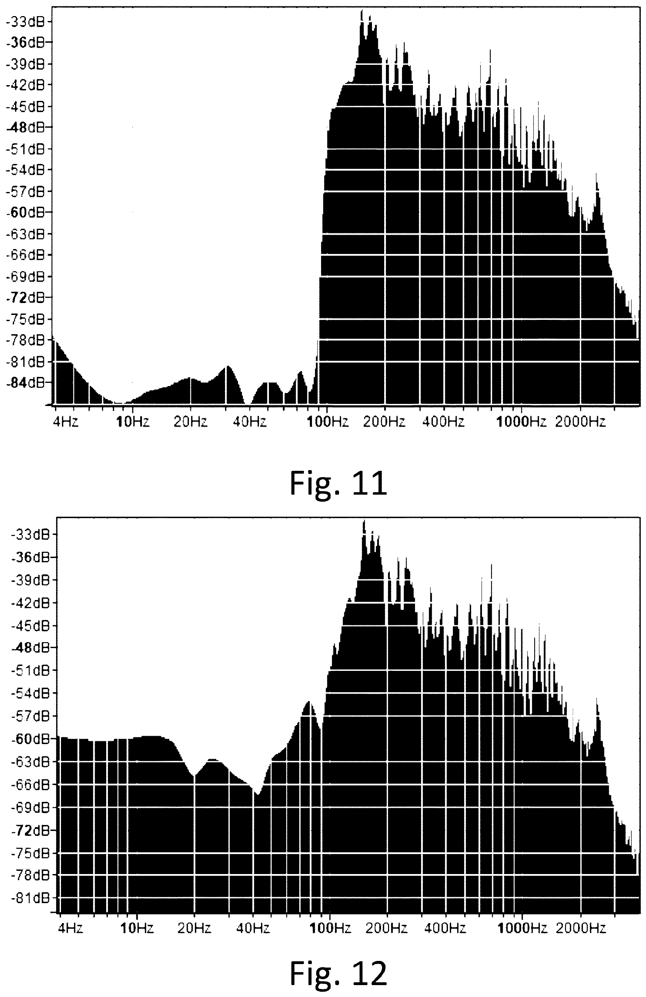

In the case of filtering, the spectral diagram shown in Figure 11 was obtained, while in the case of cancellation, the diagram in Figure 12 was obtained.

It can be seen that in both cases the de-obfuscated voice signal is substantially identical to the original signal, as the components below 100 Hz are reduced to very low levels. Audibly, no difference can be detected.

As previously explained, in the authentication method 100, it is possible to condition the acceptance of the authentication instance on the correct recognition of the obfuscating signal. Therefore, similarly, in order to proceed with the recognition of the obfuscating signal, the latter has been separated from the voice signal using a digital low-pass filter with a cutoff frequency of 100 Hz. Experimental tests have highlighted that by means of the aforementioned filtering, the spectral components of the voice signal have been completely suppressed, and by observing the time-domain diagram of the signal downstream of the filtering, it has been noted that the four DTMF tones are clearly identifiable.

On the receiving side, it was then verified that the sequence of DTMF tones was present and matched the expected sequence. This is a classic problem of recognizing an expected signal, for which there are several solutions, including, for example, calculating the cross-correlation function between the received signal and the expected signal. In the specific implementation, a simpler solution was used, which proved to be completely effective. The technique used involves two processes:
- a time-domain processing which uses a threshold, which allows for the verification of the presence of the 4 sub-vocal DTMF tones and enables the separation thereof;
- a frequency-domain processing using the Fourier transform of each previously isolated tone, to identify the two sub-vocal frequencies which compose the tone itself.

By means of the aforementioned technique, it was observed that the four sub-vocal tones are correctly present in the obfuscating signal and correspond to the expected obfuscation sequence (1234 in this example). Therefore, it is possible to condition the acceptance of the authentication instance based on the aforementioned verification performed on the obfuscating signal.

Based on the above description, it is thus possible to understand how the suggested authentication method and system fully achieve the intended objects with reference to the prior art.

Without prejudice to the principle of the present invention, the embodiments and the constructional details may be broadly varied with respect to the above description merely given by way of a non-limiting example, without departing from the scope of protection as defined in the appended claims.

## Claims

1. A voice authentication method (100), for authenticating a user by voice at an identification terminal (10), comprising the steps of:
- for an authentication instance, acquiring (102) a voice signal representative of the voice of the user by means of a user terminal (1);
- generating (103), by means of the user terminal (1), at least one obfuscation parameter (Kcr) of the acquired voice signal, wherein the obfuscation parameter (Kcr) is a parameter specifically generated for said authentication instance;
- processing (104), with the user terminal (1), the acquired voice signal by applying an obfuscation function to the acquired voice signal to generate an obfuscated voice signal, wherein said obfuscation parameter (Kcr) controls the obfuscation function;
- transmitting (105), with the user terminal (1), the obfuscated voice signal to the identification terminal (10);
- generating (106), at the identification terminal, said obfuscation parameter (Kcr);
- processing (107), at the identification terminal (10), the obfuscated signal to apply a de-obfuscation function to the obfuscated voice signal and generate a de-obfuscated voice signal, wherein the obfuscation parameter (Kcr) controls the de-obfuscation function;
- analyzing (108), at the identification terminal (10), the de-obfuscated voice signal;
- determining (109), based on the outcome of said step of analyzing (108), whether the de-obfuscated voice signal is authentic or not.

2. An authentication method (100) according to claim 1, comprising a step of:
- accepting (110) the authentication instance if during the step of determining (109) it is determined that the de-obfuscated voice signal is authentic; or otherwise
- rejecting (111) the authentication instance.

3. An authentication method (100) according to claim 1 or 2, wherein during said step of analyzing (108):
- it is analyzed, with a computer algorithm, whether the de-obfuscated voice signal is compatible or not with one or more features previously associated with the voice of the user during a step of affiliation with the identification terminal (10); and/or
- the de-obfuscated voice signal is acoustically reproduced with an acoustic transducer (21) at the identification terminal (10).

4. An authentication method (100) according to any one of the preceding claims, wherein the obfuscation parameter (Kcr) is generated by means of a challenge-response algorithm executed between the user terminal (1) and the identification terminal (10).

5. An authentication method (100) according to claim 4, wherein said challenge-response algorithm is a Challenge-Handshake Authentication Protocol - CHAP.

6. An authentication method (100) according to any one of the preceding claims, wherein the obfuscation function is an additive or multiplicative scrambling function.

7. An authentication method (100) according to claim 6, wherein said scrambling function is associated with a generator polynomial and wherein the obfuscation parameter (Kcr) is at least one coefficient of said generator polynomial.

8. An authentication method (100) according to any one of claims 1 to 5, wherein the obfuscation function is a function for adding noise to the voice signal.

9. An authentication method (100) according to claim 8, wherein the noise addition function is such as to add Dual Tone Multi Frequency - DTMF tones to the voice signal.

10. An authentication method (100) according to claim 9, wherein said at least one obfuscation parameter (Kcr) is such as to set frequencies of said DTMF tones.

11. An authentication method (100) according to any one of claims 1 to 5, wherein the obfuscation function is a function for adding inaudible in-band audio watermarking to the voice signal.

12. An authentication method (100) according to any one of the preceding claims, further comprising the steps of:
- extracting, at the identification terminal (10), from the obfuscated voice signal, a obfuscation signal representing a signal which has been superimposed on the voice signal following the application of the obfuscation function at the user terminal 1;
- generating, at the identification terminal (10), an expected obfuscation signal;
- comparing the extracted obfuscation signal with the expected obfuscation signal;
and wherein the step of determining (109) determines that the de-obfuscated voice signal is authentic if during said step of comparing it is found that the extracted obfuscation signal and the expected obfuscation signal are the same.

13. An authentication system (1, 10, 20) **characterized in that** it comprises a user terminal (1) and an identification terminal (10) configured to execute an authentication method (100) according to any one of the preceding claims.
